# EUROPEAN PATENT APPLICATION

(11) **EP 2 645 325 A1**
(43) Date of publication of application: **02.10.2013**
(21) Application number: 12819348.9
(22) Date of filing: 27.02.2012
(51) Int. Cl.: G06Q 30/06, G06Q 30/02

(54) **RESERVATION MANAGEMENT DEVICE, RESERVATION MANAGEMENT METHOD, RESERVATION MANAGEMENT PROGRAM, AND COMPUTER-READABLE RECORDING MEDIUM STORING PROGRAM FOR SAME**

(30) Priority: 29.07.2011 JP 2011167299
(71) Applicant: Rakuten, Inc., Tokyo 140-0002 (JP)
(72) Inventor: KATAGIRI Yoko, Tokyo 140-0002 (JP)
(74) Representative: HOFFMANN EITLE
(86) International application number: PCT/JP2012/054808
(87) International publication number: WO 2013/018390

(57) **Abstract**

A reservation management device (40) includes a calculation unit (42a) that calculates a pace of reservations for at least a first priority plan with a highest priority of sales among a plurality of plans with different priorities of sales by referring to a reservation record database (33), an estimation unit (42b) that estimates an expected number of reservations for at least the first priority plan based on the pace of reservations and a remaining number of days until the date of use, a determination unit (42c) that determines the allocated number for each plan in descending order of the priority of sales based on the number of vacancies in facilities, the expected number of reservations and the priority of sales for each plan, and an update unit (42d) that updates the allocated number for each plan stored in a vacancy database (32) to the allocated number for each plan determined by the determination unit (42c).

## Description

### Technical Field

One embodiment of the present invention relates to a reservation management device that manages reservation of facilities, a reservation management method, a reservation management program, and a computer-readable recording medium storing the program.

### Background Art

A reservation system that offers a plurality of plans for public facilities such as hotel rooms and golf courses and sells the plurality of plans to users is known. In the following Patent Literature 1, a hotel reservation system that changes the room rate of hotels in stages and delivers rate information to users who are on the waiting for vacancies each time the rate changes is disclosed.

### Citation List

### Patent Literature

PTL 1: Japanese Unexamined Patent Application Publication No. 2003-256703

### Summary of Invention

### Technical Problem

The capacity utilization, sales, profits and the like of facilities vary depending on the way vacancies in public facilities are allocated to a plurality of plans. The allocation has been decided on the basis of the past performance, the experience of a person who decides it and the like, and if the allocation is not appropriate, there is a possibility that those who offer public facilities cannot obtain desired results. For example, cases can occur where the overall capacity utilization decreases as a result that a large proportion of vacancies is allocated to high price plans in order to increase the sales and profits, or the sales and profits reach the ceiling as a result that a large proportion of vacancies is allocated to low price plans in order to increase the capacity utilization.

In view of the foregoing, an object of one aspect of the present invention is to appropriately allocate vacancies in public facilities to a plurality of plans.

### Solution to Problem

A reservation management device according to one embodiment of the present invention is a reservation management device capable of accessing an allocation storage unit that stores an allocated number of facilities for each of a plurality of plans set for one facility on one date of use and a reservation storage unit that stores a date of reservation for each plan, the device including a calculation unit that calculates a pace of reservations for at least a first priority plan with a highest priority of sales among the plurality of plans with different priorities of sales by referring to the reservation storage unit, an estimation unit that estimates an expected number of reservations for at least the first priority plan based on the pace of reservations and a remaining number of days until the date of use, a determination unit that determines the allocated number for each plan in descending order of the priority of sales based on the number of vacancies in the facilities, the expected number of reservations, and the priority of sales for each plan, and an update unit that updates the allocated number for each plan stored in the allocation storage unit to the allocated number for each plan determined by the determination unit.

A reservation management method according to one embodiment of the present invention is a reservation management method executed by a reservation management device capable of accessing an allocation storage unit that stores an allocated number of facilities for each of a plurality of plans set for one facility on one date of use and a reservation storage unit that stores a date of reservation for each plan, the method including a calculation step of calculating a pace of reservations for at least a first priority plan with a highest priority of sales among the plurality of plans with different priorities of sales by referring to the reservation storage unit, an estimation step of estimating an expected number of reservations for at least the first priority plan based on the pace of reservations and a remaining number of days until the date of use, a determination step of determining the allocated number for each plan in descending order of the priority of sales based on the number of vacancies in the facilities, the expected number of reservations, and the priority of sales for each plan, and an update step of updating the allocated number for each plan stored in the allocation storage unit to the allocated number for each plan determined in the determination step.

A reservation management program according to one embodiment of the present invention is a reservation management program causing a computer to function as a reservation management device capable of accessing an allocation storage unit that stores an allocated number of facilities for each of a plurality of plans set for one facility on one date of use and a reservation storage unit that stores a date of reservation for each plan, the program causing the computer to implement a calculation unit that calculates a pace of reservations for at least a first priority plan with a highest priority of sales among the plurality of plans with different priorities of sales by referring to the reservation storage unit, an estimation unit that estimates an expected number of reservations for at least the first priority plan based on the pace of reservations and a remaining number of days until the date of use, a determination unit that determines the allocated number for each plan in descending order of the priority of sales based on the number of vacancies in the facilities, the expected number of reservations, and the priority of sales for each plan, and an update unit that updates the allocated number for each plan stored in the allocation storage unit to the allocated number for each plan determined by the determination unit.

A computer-readable recording medium according to one embodiment of the present invention is a computer-readable recording medium storing a reservation management program causing a computer to function as a reservation management device capable of accessing an allocation storage unit that stores an allocated number of facilities for each of a plurality of plans set for one facility on one date of use and a reservation storage unit that stores a date of reservation for each plan, the reservation management program causing the computer to implement a calculation unit that calculates a pace of reservations for at least a first priority plan with a highest priority of sales among the plurality of plans with different priorities of sales by referring to the reservation storage unit, an estimation unit that estimates an expected number of reservations for at least the first priority plan based on the pace of reservations and a remaining number of days until the date of use, a determination unit that determines the allocated number for each plan in descending order of the priority of sales based on the number of vacancies in the facilities, the expected number of reservations, and the priority of sales for each plan, and an update unit that updates the allocated number for each plan stored in the allocation storage unit to the allocated number for each plan determined by the determination unit.

According to the above-described embodiments, the pace of reservations for at least the first priority plan is calculated, and the expected number of reservations for at least the first priority plan is estimated based on the pace of reservations and the remaining number of days until the date of use. Then, the allocated number for each plan is updated in descending order of the priority of sales based on the number of vacancies in the facilities, the expected number of reservations, and the priority of sales for each plan. The necessary number of vacancies is thereby assured for the plan desired to be sold most, and, as a result, vacancies in facilities can be appropriately allocated to each of a plurality of accommodation plans.

In the reservation management device according to another embodiment, the determination unit may set the allocated number for the first priority plan in such a way that all vacancies in the facilities can be allocated to the first priority plan, and set the allocated number for a plan to be processed other than the first priority plan based on the expected number of reservations for the plan to be processed and the expected number of reservations and the number of reservations made for a plan with a higher priority of sales than the plan to be processed.

In the reservation management device according to yet another embodiment, the calculation unit may calculate the pace of reservations for each plan by dividing a reservation period of the plan by the number of reservations made for the plan. In this manner, by calculating the pace of reservations in consideration of the reservation period, it is possible to maintain a balance among the plans regarding the allocation of facilities.

In the reservation management device according to yet another embodiment, the calculation unit may calculate the pace of reservations each time a reservation for a plan is made. In this manner, by performing the processing of updating the allocated number that begins with the calculation of the pace of reservations each time a reservation is made, it is possible to more finely adjust the allocated number.

In the reservation management device according to yet another embodiment, the calculation unit may calculate the pace of reservations again after a time corresponding to the minimum value of the calculated pace of reservations has elapsed. In this manner, by performing the processing of updating the allocated number at the timing corresponding to the time when the next reservation is predicted to be made, it is possible to more finely adjust the allocated number as well as reducing the number of times of update processing.

### Advantageous Effects of Invention

According to one aspect of the present invention, it is possible to appropriately allocate vacancies in public facilities to a plurality of plans.

### Brief Description of Drawings

Fig. 1 is a diagram showing an overall configuration of an accommodation reservation system according to an embodiment.
Fig. 2 is a diagram showing an example of plan information.
Fig. 3 is a diagram showing an example of vacancy information.
Fig. 4 is a diagram showing an example of reservation information.
Fig. 5 is a diagram showing a hardware configuration of a reservation management device shown in Fig. 1.
Fig. 6 is a diagram showing a functional configuration of the reservation management device shown in Fig. 1.
Fig. 7 is a diagram showing an example of a procedure to update the allocated number.
Fig. 8 is a flowchart showing an operation of the reservation management device shown in Fig. 1.
Fig. 9 is a flowchart showing details of an allocated number determination process shown in Fig. 8.
Fig. 10 is a flowchart showing details of the allocated number setting process shown in Fig. 9.
Fig. 11 is a diagram showing a configuration of an accommodation reservation program according to an embodiment.
Fig. 12 is a diagram showing an example (example 1) of adjustment by the reservation management device shown in Fig. 1.
Fig. 13 is a diagram showing an example (example 2) of adjustment by the reservation management device shown in Fig. 1.
Fig. 14 is a diagram showing an example (related art example 1-1) of acceptance of reservations according to related art.
Fig. 15 is a diagram showing an example (related art example 1-2) of acceptance of reservations according to related art.
Fig. 16 is a diagram showing an example (related art example 2-1) of acceptance of reservations according to related art.
Fig. 17 is a diagram showing an example (related art example 2-2) of acceptance of reservations according to related art.

### Description of Embodiments

An embodiment of the present invention is described hereinafter in detail with reference to the appended drawings. In the description of the drawings, the same or equivalent elements are denoted by the same reference symbols, and the redundant explanation thereof is omitted.

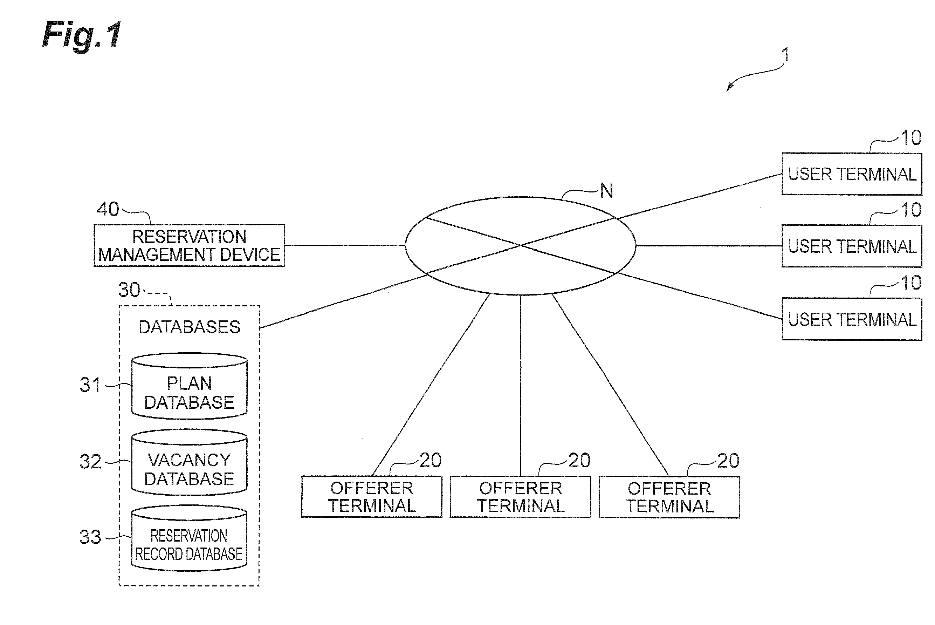

The functions and configuration of an accommodation reservation system 1 according to this embodiment are described firstly with reference to Figs. 1 to 7. The accommodation reservation system 1 is a computer system that offers a website (accommodation reservation site) that accepts reservations for accommodation facilities to users. The accommodation reservation system 1 includes user terminals 10, offerer terminals 20 installed in accommodation facilities such as hotels and inns, databases 30, and a reservation management device 40. The user terminals 10, the offerer terminals 20, the databases 30 and the reservation management device 40 can communicate with one another through a communication network N, which is the Internet, a wireless LAN, a mobile communication network or the like. Although three user terminals 10 and three offerer terminals 20 are shown in Fig. 1, the number of those devices in the accommodation reservation system 1 is arbitrary.

The user terminals 10 are terminals owned by users who make reservations for a room of accommodation facilities. Examples of the user terminals 10 include advanced mobile phones (smart phones), personal digital assistants (PDA), personal computers (PC) and the like, though the variety of the mobile terminals is not limited thereto. A user can access the accommodation reservation site by operating the user terminal 10 and make reservations for a room (accommodation plan).

The offerer terminals 20 are terminals of accommodation facilities that offer rooms (accommodation plans) for which reservations are to be made in the accommodation reservation system 1. An example of the offerer terminals 20 is a PC; however, various types of mobile terminals can be also used as the offerer terminals 20. An administrator of accommodation facilities operates the offerer terminal 20 and stores information about vacancies and accommodation plans for which reservations are accepted as vacancy information into a vacancy database 32.

The databases 30 are a means of storing various information that are used in the accommodation reservation system 1. The databases 30 include a plan database 31, a vacancy database (allocation storage unit) 32, and a reservation record database (reservation storage unit) 33.

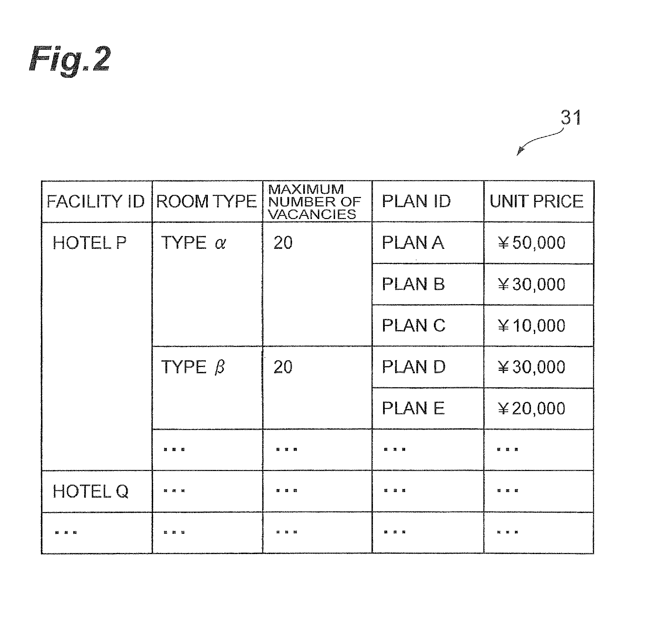

The plan database 31 is a means of storing information about accommodation plans (plan information) offered by accommodation facilities. As shown in Fig. 2, the plan information includes a facility ID that identifies each of accommodation facilities, a room type, the maximum number of vacancies in each room, a plan ID that identifies each of accommodation plans, and the unit price of each plan. The room type is the type of each room that is indicated by the style (Western-style room, Japanese-style room etc.), the capacity or the like of the room. Note that the accommodation plan is hereinafter also referred to simply as "plan". One or more plans correspond to one room type. It is noted that the plan is a package item related to usage of facilities.

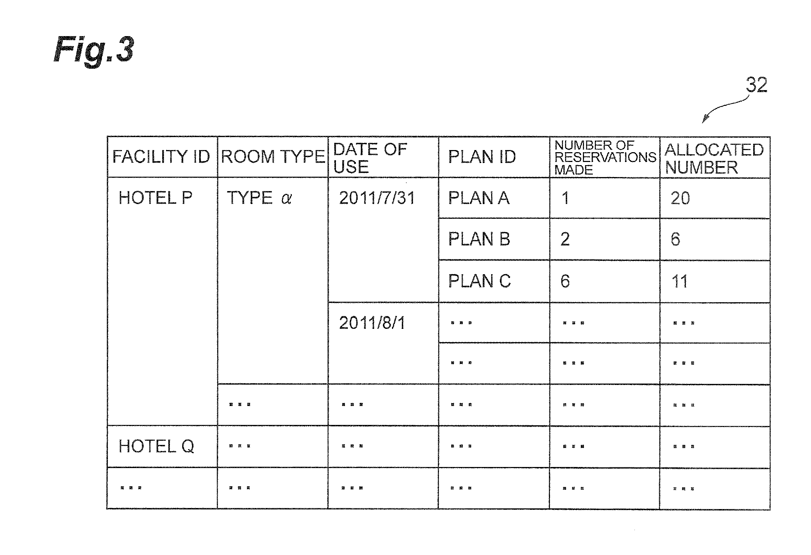

The vacancy database 32 is a means of storing vacancy information for managing the number of rooms allocated to each plan (the allocated number). As shown in Fig. 3, the vacancy information includes a facility ID, a room type, date of use (first date of stay), a plan ID, the number of reservations accepted (the number of reservations made), and the allocated number. The allocated number is the total number of rooms that are allocated to each plan, and the number of reservations made is included in this value. The initial value of the allocated number of each plan is the maximum number of vacancies in the room indicated by the corresponding plan information.

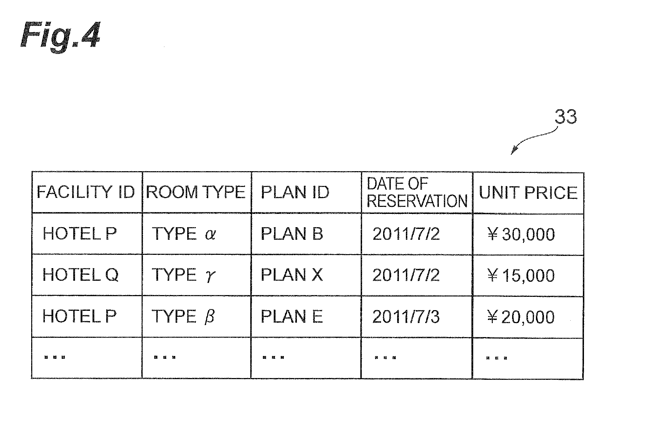

The reservation record database 33 is a means of storing reservation information indicating reservations for accommodation facilities by users. As shown n Fig. 4, the reservation information includes a facility ID, a room type, a plan ID, date of reservation (scheduled date of use), and the unit price. The reservation information is stored into the reservation record database 33 at the time when a reservation for an accommodation plan is fixed on an accommodation reservation site.

Note that the structure of each database is not limited to the above example, and each database may be normalized or made redundant by an arbitrary policy.

On the assumption of the above, the reservation management device 40 is described. The reservation management device 40 is a computer that offers various services related to accommodation reservations such as search of accommodation facilities and acceptance of accommodation reservations to users through an accommodation reservation site.

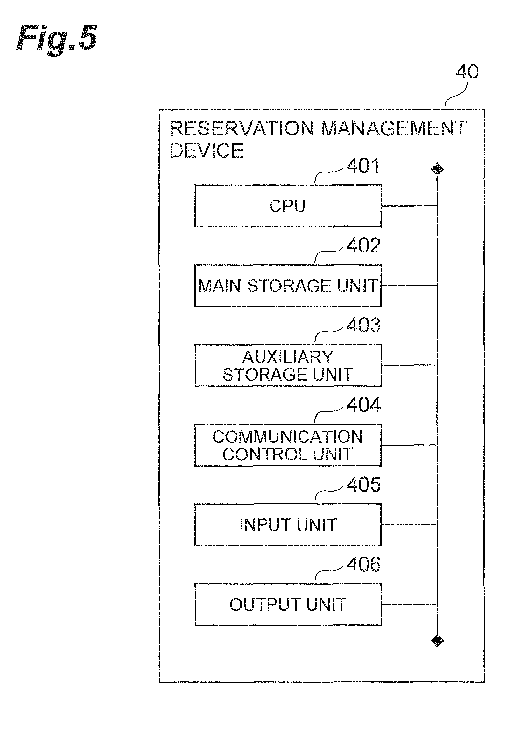

As shown in Fig. 5, the reservation management device 40 is composed of a CPU 401 that executes an operating system, an application program and the like, a main storage unit 402 such as ROM and RAM, an auxiliary storage unit 403 such as a hard disk, a communication control unit 404 such as a network card, an input unit 405 such as a keyboard and a mouse, and an output unit 406 such as a display.

The functional components of the reservation management device 40 described later are implemented by loading given software onto the CPU 401 or the main storage unit 402, making the communication control unit 404, the input device 405, the output device 406 and the like operate under control of the CPU 401, and performing reading and writing of data in the main storage unit 402 or the auxiliary storage unit 403. The data and database required for processing are stored in the main storage unit 402 or the auxiliary storage unit 403. Note that, although the reservation management device 40 is composed of one computer in Fig. 5, the functions of the reservation management device 40 may be distributed among a plurality of computers.

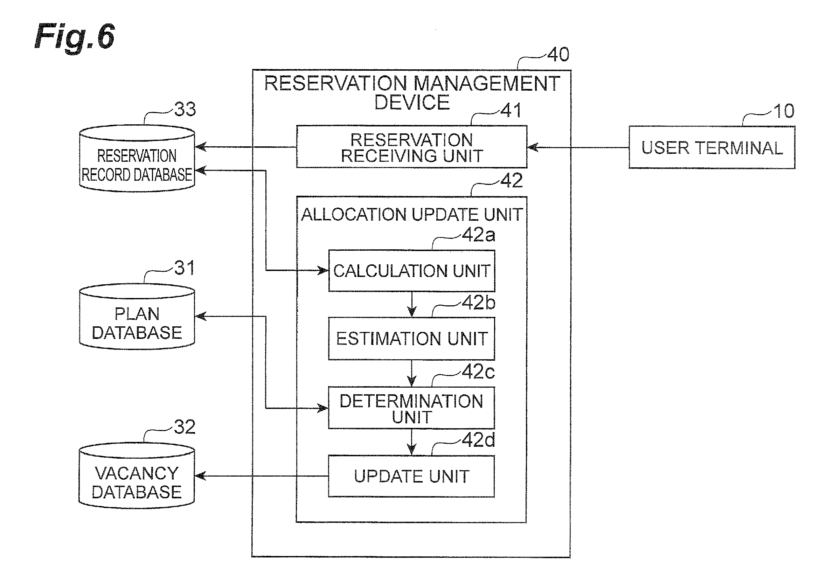

As shown in Fig. 6, the reservation management device 40 includes, as functional components, a reservation receiving unit 41 and an allocation update unit 42.

The reservation receiving unit 41 is a means of receiving accommodation reservations ordered from users. The reservation receiving unit 41 receives reservation information indicating reservations ordered through the accommodation reservation site from the user terminals 10 and stores the reservation information into the reservation record database 33.

The allocation update unit 42 is a means of updating the allocated number of rooms to each plan based on the priority of sales. In this embodiment, the unit price of each plan is used as the indicator of the priority of sales, and rooms are allocated with higher priority to a plan with a higher unit price. The allocation update unit 42 includes a calculation unit 42a, an estimation unit 42b, a determination unit 42c, and an update unit 42d.

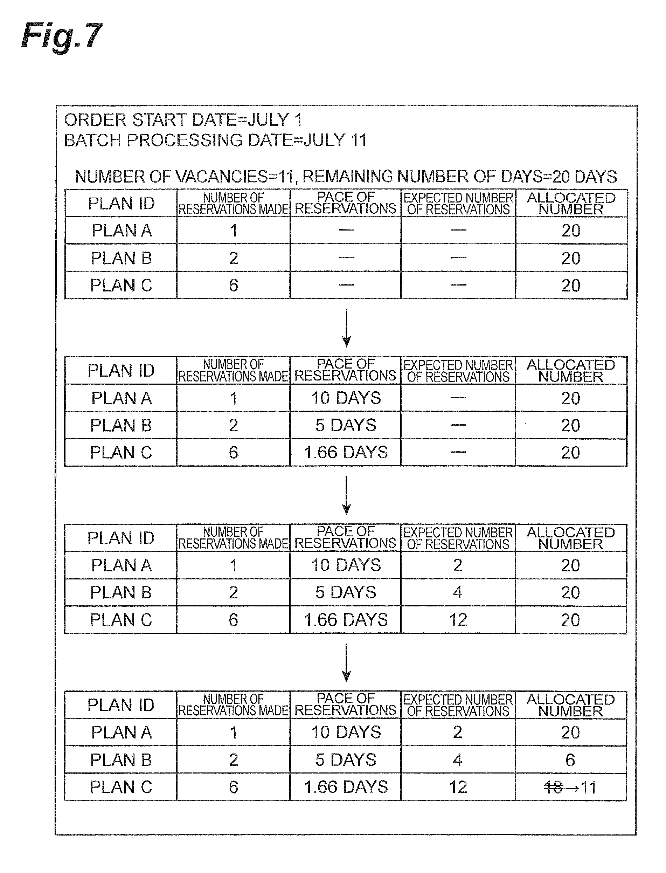

Those functional components are described hereinafter with reference to an example of update in Fig. 7. Fig. 7 is a diagram illustrating an example of allocating 20 rooms to three plans A to C with different unit prices on the assumption that the total available vacancies in a room type α of a hotel P on July 31 are 20 rooms (cf. Fig. 2). It is assumed that the order of the plans A to C has started on July 1. The initial value of the allocated number of the plans A to C is 20. In this embodiment, it is assumed that the allocation update unit 42 updates the allocated number every 10 days (by batch processing on July 11, 21 and 31 before dawn). Fig. 7 shows the batch processing on July 11 before dawn.

The calculation unit 42a is a means of calculating the pace of reservations for accommodation plans by reference to the reservation record database 33. The pace of reservations is a value indicating the number of days taken to make one reservation on average, and a plan with a lower value is considered to be more popular. The calculation unit 42a calculates the pace of reservations by dividing the number of elapsed days from a reference date common to each plan (the day when each plan is made public on the accommodation reservation site as items for which reservations can be made) to the current time by the number of reservations ordered from the reference date to the current time.

The processing on July 11 before dawn is described. In the example of Fig. 7, the reference date is July 1, and therefore the calculation unit 42a reads the reservation information stored during the period of July 1 to 10 from the reservation record database 33. The number of reservations for the plans A, B and C until July 10 (which is, the number of reservations for the plans A, B and C at the time when 10 days have been passed from the start of offering) is 1, 2 and 6, respectively. Thus, the pace of reservations for the plan A is 10 (=10/1), the pace of reservations for the plan B is 5 (=10/2) and the pace of reservations for the plan C is 1.66 (≈10/6). The calculation unit 42a outputs the pace of reservations calculated in this manner to the estimation unit 42b.

Next, processing by the estimation unit 42b is performed. The estimation unit 42b is a means of estimating the expected number of reservations based on the pace of reservations for each plan and the remaining number of days until the date of use. The expected number of reservations is the additional number of reservations that is expected until the date of use. The estimation unit 42b calculates the expected number of reservations for each plan by dividing the remaining number of days until the date of use by the input pace of reservations.

As for the processing on July 11 before dawn, because the remaining number of days until the date of use is 20 days, the expected number of reservations for the plan A is 2(=20/10), the expected number of reservations for the plan B is 4(=20/5), and the expected number of reservations for the plan C is 12(≈20/1.66). The estimation unit 42b outputs the expected number of reservations calculated in this manner to the determination unit 42c.

Then, processing by the determination unit 42c is performed. The determination unit 42c is a means of determining the allocated number to each plan so that further reservations estimated for the plan with the highest unit price (first priority plan) can be accepted within the range of the remaining number of rooms (the number of vacancies). This means giving the top priority to the allocation of vacancies to the plan with the highest unit price. The determination unit 42c outputs the determined allocated number to the update unit 42d.

First, the determination unit 42c acquires the priority of sales of each plan by referring to the plan database 31. The plans shown in Fig. 2 are the plan A, the plan B and the plan C when arranged in descending order of unit price, and therefore the highest priority to allocate rooms is given to the plan A, the second highest priority is given to the plan B, and the lowest priority is given to the plan C. As for the processing on July 11 before dawn based on this assumption, because the total 9 rooms have been already reserved, the determination unit 42c specifies the number of vacancies as 11(=20-9). The determination unit 42c then calculates the sum of the number of reservations made and the expected number of reservations as the estimated number of reservations for the plan with the highest priority of sales. In the example of Fig. 7, the estimated number of reservations for the plan A is 3(1+2).

After that, the determination unit 42c determines the allocated number for each of the plans with the second highest and subsequent priorities of sales, assuring the allocated number corresponding to the estimated number of reservations for the plan with the highest priority of sales. First, the determination unit 42c keeps the allocated number for the plan to be the initial value. This is because there is absolutely no problem if a larger number of reservations than the estimated number of reservations are made for the plan with the highest priority of sales. Next, the determination unit 42c determines the allocated number for each of the plans with the second highest and subsequent priorities of sales. In the example of Fig. 7, the number of vacancies is 11, but because the number of rooms corresponding to the estimated number of reservations for the plan A (which is 2 rooms) is assured, the remaining 9 rooms that can be distributed are allocated among the plans B and C. The determination unit 42c allocates rooms to each of the plans with the second highest and subsequent priorities of sales in order of priority of sales. At this time, for the plan whose expected number of reservations is larger than the unallocated number of vacancies, the determination unit 42c adds only the unallocated number of vacancies to the plan.

In the example of Fig. 7, the allocated number for the plan A (first priority plan) remains 20. The expected number of reservations (4) for the plan B, which is the next plan to be processed, is equal to or smaller than the unallocated number of vacancies (9), and therefore the allocated number is 6(=2+4). The expected number of reservations (12) for the plan C, which is the next plan to be processed, is larger than the unallocated number of vacancies (9-4=5), and therefore the allocated number is 11(=6+5), not 18(=6+12).

In this manner, the determination unit 42c sets the allocated number for the first priority plan so that all vacancies in public facilities can be allocated, and sets the allocated number for the other plans within the range of the expected number of reservations and the unallocated number of vacancies. The unallocated number of vacancies is calculated based on the expected number of reservations for a plan to be processed and the expected number of reservations and the number of reservations made for the plan with the higher sales of priority than the plan to be processed.

The update unit 42d is a means of storing the determined allocated number into the vacancy database 32 by way of overwriting. The allocated number for each plan is thereby updated. In the processing on July 11 before dawn, the allocated number for the plan A remains 20, and the allocated numbers for the plans B and C are updated to 6 and 11, respectively.

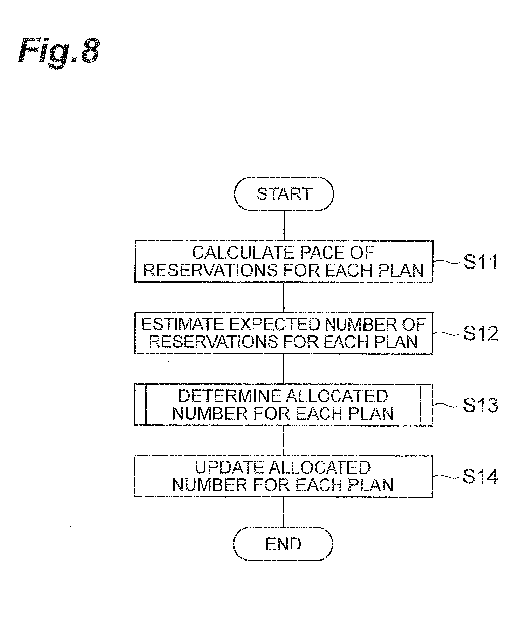

The operation of the reservation management device 40 is described, and further, a reservation management method according to this embodiment is described hereinafter with reference to Figs. 8 to 10.

When the processing by the allocation update unit 42 is started, the calculation unit 42a first calculates the pace of reservations for each plan (Step S11, calculation step). Next, the estimation unit 42b estimates the expected number of reservations for each plan based on the pace of reservations and the remaining number of days until the date of use (Step S12, estimation step). Then, the determination unit 42c determines the allocated number for each plan (Step S 13, determination step).

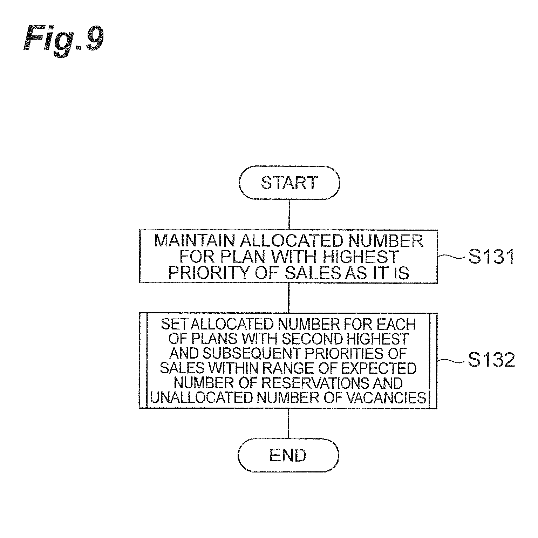

Specifically, as shown in Fig. 9, the determination unit 42c first keeps the allocated number for the plan with the highest priority of sales (the plan with the highest unit price) as it is (Step S131). On the other hand, the determination unit 42c sets the allocated number for each of the plans with the second highest and subsequent priorities of sales within the range of the expected number of reservations and the unallocated number of vacancies (Step S 132).

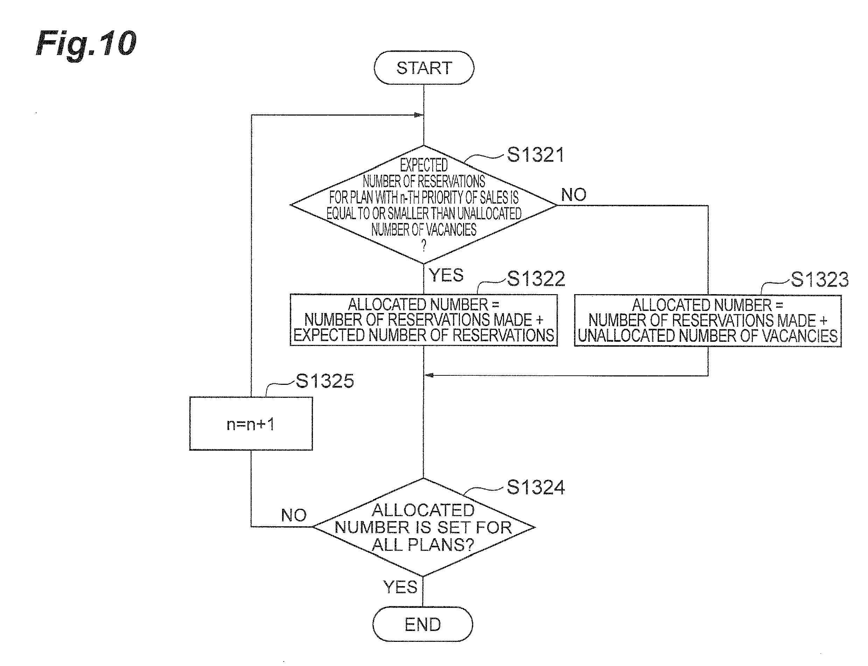

Specifically, as shown in Fig. 10, when the expected number of reservations for the plan with the n-th (the initial value of n is 2) priority of sales is equal to or smaller than the unallocated number of vacancies (YES in Step S1321), the determination unit 42c sets the allocated number for the plan as the sum of the number of reservations made and the expected number of reservations (Step S1322). On the other hand, when the expected number of reservations for that plan is larger than the unallocated number of vacancies (NO in Step S1321), the determination unit 42c sets the allocated number as the sum of the number of reservations made and the unallocated number of vacancies (Step S1323). When the unallocated number of vacancies is 0, the allocated number equals the number of reservations made. When there is another plan to be processed (NO in Step S 1324), the determination unit 42c performs the processing of Steps S 1321 to S 1323 for the plan with the (n+1)th priority of sales (Step S1325). When the allocated number is set for all plans (YES in Step S 1324), the process ends.

Finally, the update unit 42d updates the allocated number for each plan to the new allocated number (Step S 14, update step).

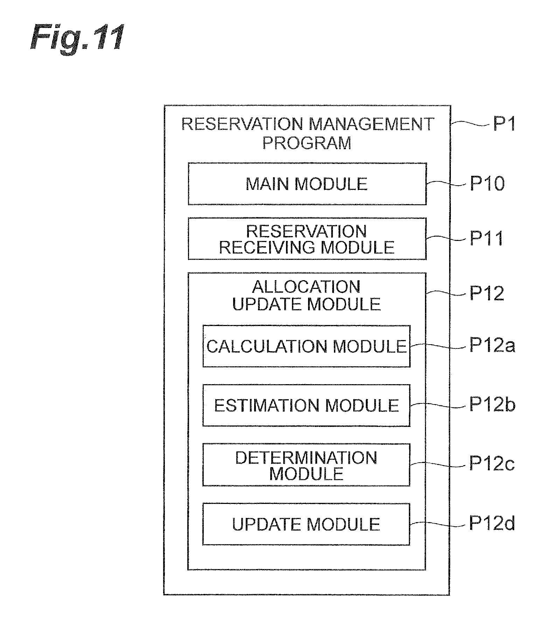

Hereinafter, a reservation management program that causes a computer to function as the reservation management device 40 is described with reference to Fig. 11.

A reservation management program P1 includes a main module P10, a reservation receiving module P11 and an allocation update module P12. The allocation update module P12 includes a calculation module P12a, an estimation module P12b, a determination module P12c, and an update module P12d.

The main module P10 is a part that exercises control over the reservation management functions. The functions implemented by executing the reservation receiving module P11 and the allocation update module P12 are equal to the functions of the reservation receiving unit 41 and the allocation update unit 42 described above, respectively. The functions implemented by executing the calculation module P12a, the estimation module P12b, the determination module P12c and the update module P12d are equal to the functions of the calculation unit 42a, the estimation unit 42b, the determination unit 42c and the update unit 42d described above, respectively.

The reservation management program P1 is provided in the form of being recorded in a static manner on a recording medium such as CD-ROM or DVD-ROM or semiconductor memory, for example. Further, the reservation management program P1 may be provided as a computer data signal superimposed onto a carrier wave through a communication network.

As described above, according to this embodiment, the pace of reservations for each plan is calculated, and the expected number of reservations for each plans is estimated based on the pace of reservations and the remaining number of days until the date of use. Then, the allocated number for each accommodation plan is updated in descending order of priority of sales based on the number of vacancies in accommodation facilities, the estimated expected number of reservations, and the priority of sales of each accommodation plan. The necessary number of vacancies is thereby assured for the accommodation plan desired to be sold most, and, as a result, vacancies in accommodation facilities can be appropriately allocated to each of a plurality of accommodation plans.

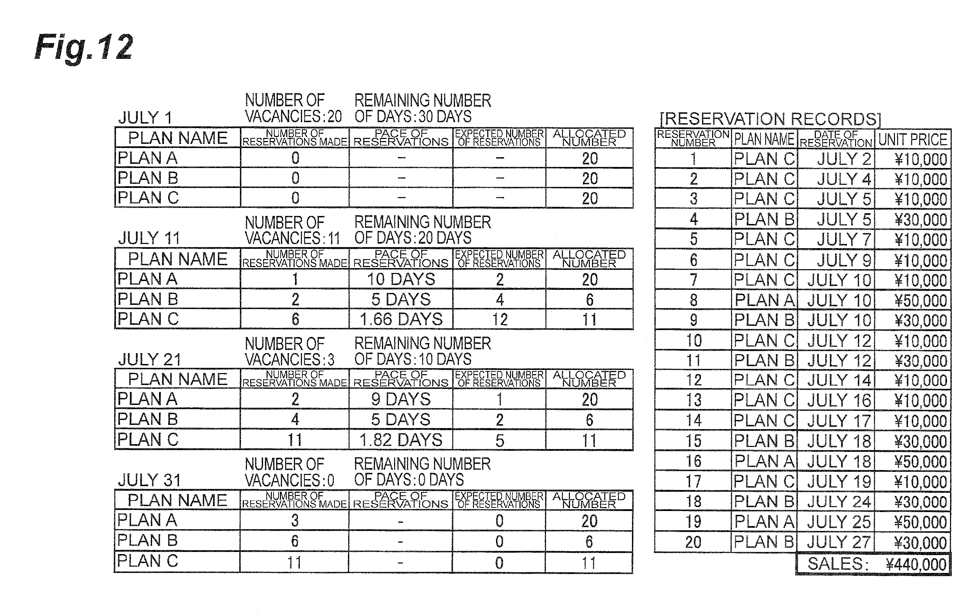

The advantages of the above allocation are further described hereinafter with reference to specific examples of Figs. 12 to 17. Figs. 12 to 17 show the examples below. Note that, in Figs. 12 to 17, reservation numbers indicating the order of reservations are shown for the convenience of description. The result on July 11 in Fig. 12 is the same as that shown in Fig. 7.

Fig. 12: Example where the pace of reservations for a plan with a low unit price is fast in the case of adjusting the allocated number by applying this embodiment (example 1).

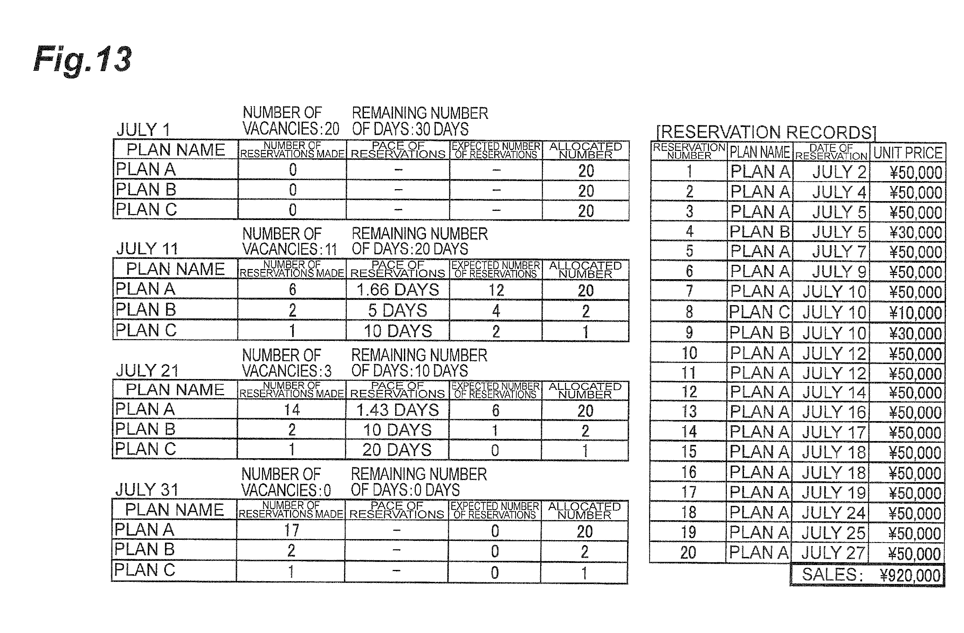

Fig. 13: Example where the pace of reservations for a plan with a high unit price is fast in the case of adjusting the allocated number by applying this embodiment (example 2).

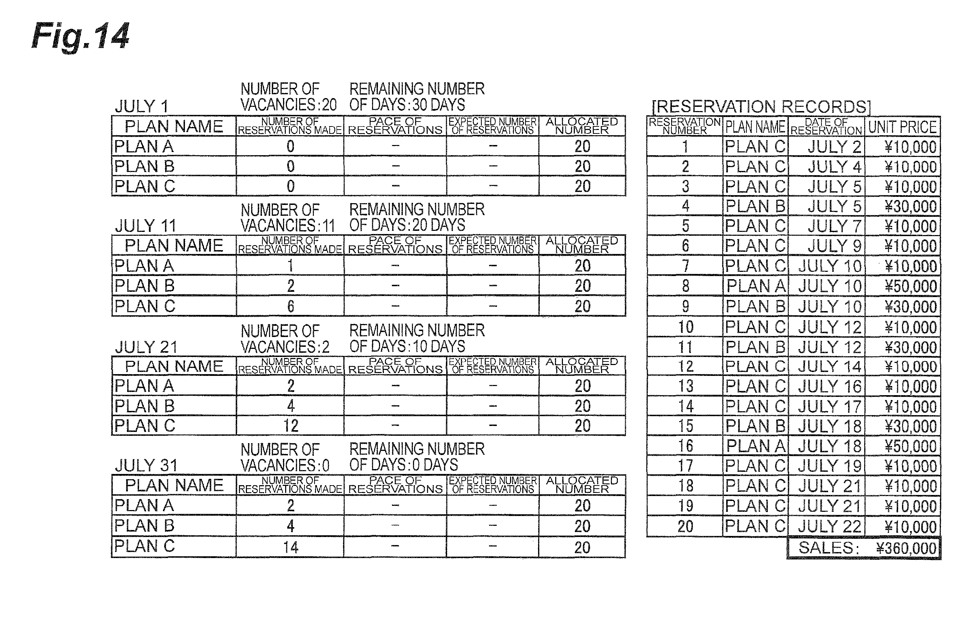

Fig. 14: Example where the pace of reservations for a plan with a low unit price is fast in the case of allocating rooms in order of orders received without applying this embodiment (related art example 1-1).

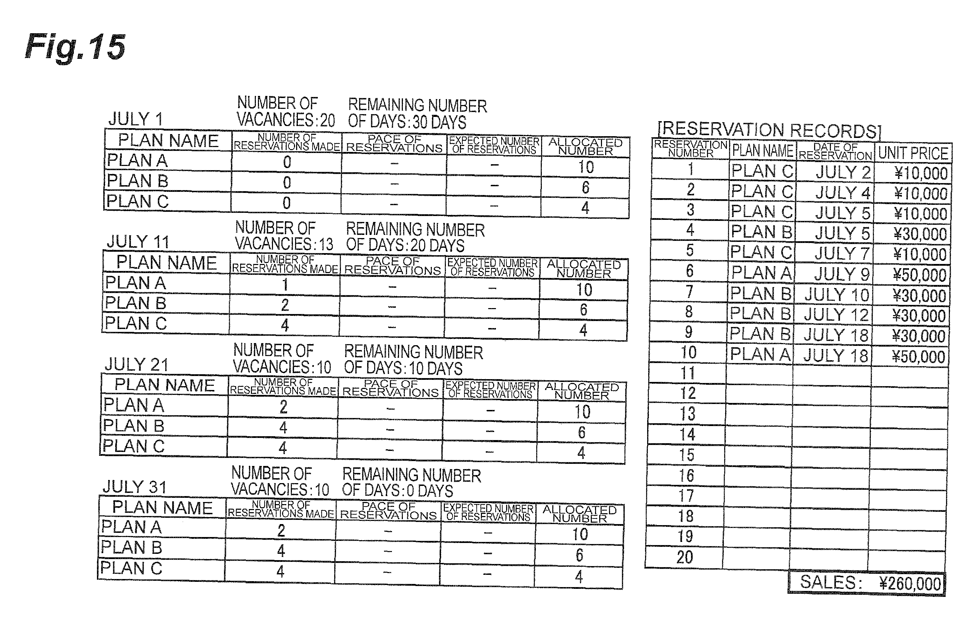

Fig. 15: Example where the pace of reservations for a plan with a low unit price is fast in the case of allocating the number of rooms for each plan manually without applying this embodiment (related art example 1-2).

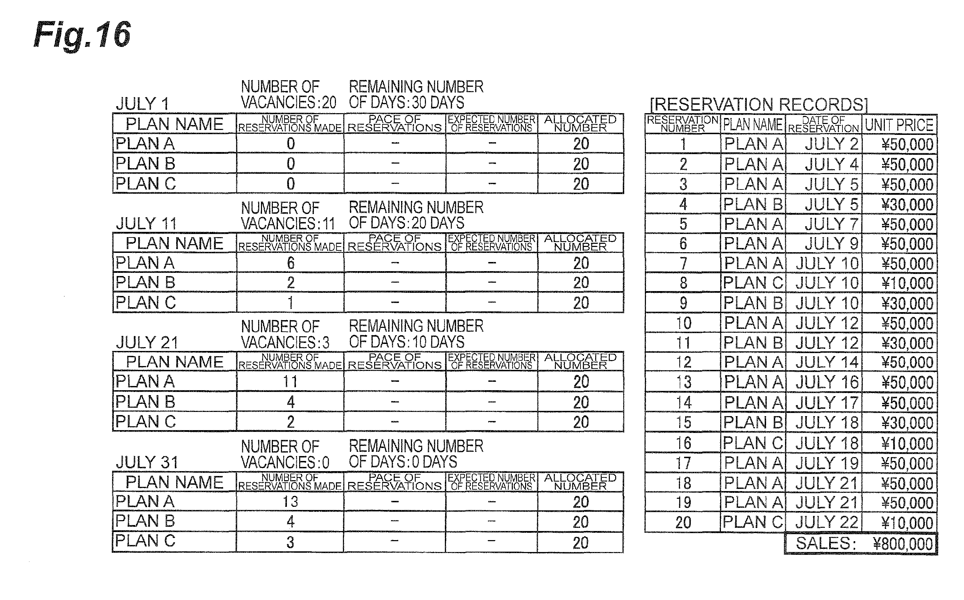

Fig. 16: Example where the pace of reservations for a plan with a high unit price is fast in the case of allocating rooms in order of orders received without applying this embodiment (related art example 2-1).

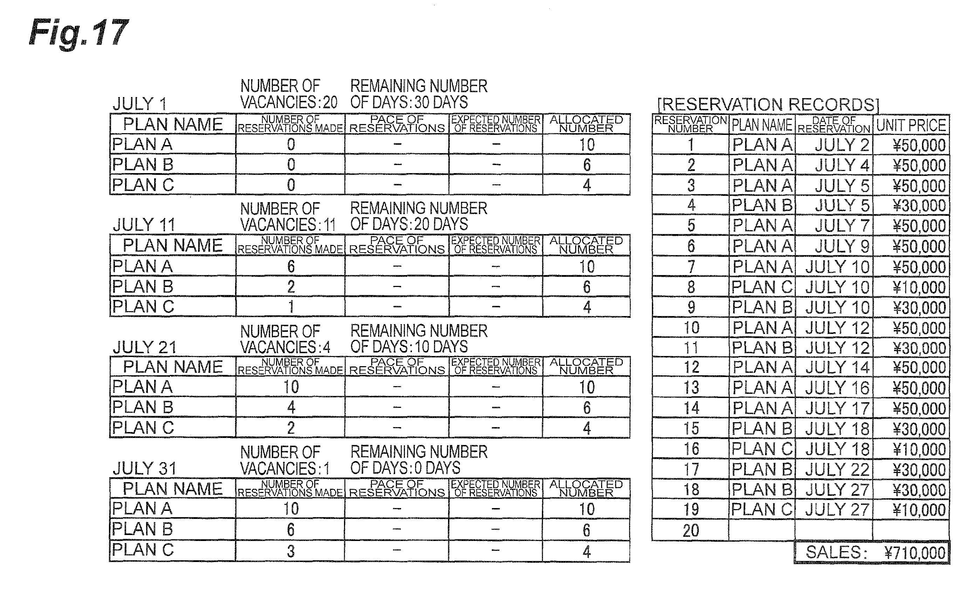

Fig. 17: Example where the pace of reservations for a plan with a high unit price is fast in the case of allocating the number of rooms for each plan manually without applying this embodiment (related art example 2-2).

First, comparing the example 1 and the related art example 1-1 where the pace of reservations for a plan with a low unit price is fast, the way reservations are made is the same for the reservation numbers 1 to 17. However, in the example 1, reservations for the plan C become unacceptable at the point when the 11th reservation for the plan C (the reservation number 17) is made. Thus, it is allowed to make reservations for the plans A and B that are more expensive than the plan C as shown in Fig. 12. On the other hand, in the case of the related art example 1-1, because no adjustment is made to the allocated number, it is allowed to make reservations for the plan C after the 11th reservation for the plan C (the reservation number 17) is made, and therefore there is a possibility that the remaining 3 vacancies are filled by the plan C as shown in Fig. 14. Further, when a larger number of rooms are allocated to the plans A and B than to the plan C as in the related art example 1-2, there is a possibility that reservations for the plan C are closed at the early point but vacancies allocated for the more expansive plans A and B cannot be filled as shown in Fig. 15.

Next, comparing the example 2 and the related art example 2-1 where the pace of reservations for a plan with a high unit price is fast, the way reservations are made is the same for the reservation numbers 1 to 9. However, in the example 2, because the allocated numbers for the plans B and C are set to 2 and 1, respectively, in the batch processing on July 11 before dawn, reservations for the plans B and C become unacceptable after July 11. Thus, it is possible to maximally accept reservations for the plan A with the fast pace of reservations as shown in Fig. 13. On the other hand, in the case of the related art example 2-1, because no adjustment is made to the allocated number, it is allowed to make reservations for the plans B and C after July 11. Further, because the allocated number for each of the plans A and B is fixed in the related art example 2-2, reservations for the plan A, which is popular, need to be closed at the point when the 10th reservation for the plan A (the reservation number 14) is made as shown in Fig. 17.

As is obvious from the comparison of the example 1 with the related art examples 1-1 and 1-2 and the comparison of the example 2 with the related art examples 2-1 and 2-2, it is possible to achieve a balance between filling vacancies and ensuring sales in this embodiment compared to the related art.

Embodiments of the present invention are described in detail above. However, the present invention is not limited to the above-described embodiments. Various changes and modifications may be made to the present invention without departing from the scope of the invention.

Depending on the processing result of the allocation update unit 42, there is a case where a plan where "the allocated number = the number of reservations made" occurs, and reservations for the plan are closed until the allocated number is updated to a value larger than the number of reservations made in the processing of the allocation update unit 42 which is performed after that. In this case, the calculation unit 42a may calculate the pace of reservations for such a plan by dividing a reservation period (a period during which the plan is offered) by the number of reservations, not by dividing the period from the reference date to the current time by the number of reservations.

For example, in the above-described example 2 (Fig. 13), reservations for the plans B and C are closed on July 11. In this case, in the next batch processing (the batch processing on July 21 before dawn), the calculation unit 42a may calculate the pace of reservations for the plan A as "20/(the number of reservations made)" and set the pace of reservations for the plan B as 5(=10/2) and the pace of reservations for the plan C as 10(=10/1). This is because the offering period of the plan A is from July 1 to 20 and the offering periods of the plans B and C are both only from July 1 to 10. By adjusting the period based on which the pace of reservations is calculated in this manner, it is possible to maintain a balance among the plans regarding the allocation of public facilities.

Although the allocation update unit 42 performs the processing every ten days in the above-described embodiment, the period of performing the processing by the allocation update unit 42 is not limited thereto. For example, the allocation update unit 42 may perform the above-described series of processing steps each time one accommodation reservation is made. In this case, the allocation update unit 42 may start the series of processing steps at the timing when the reservation information is stored into the reservation record database 33. In this manner, by performing the processing of updating the allocated number that begins with the calculation of the pace of reservations each time a reservation is made, it is possible to more finely adjust the allocated number.

Alternatively, the allocation update unit 42 may perform the (n+1)th batch processing when the number of days corresponding to the minimum value of the pace of reservations for each plan obtained by the n-th batch processing has elapsed. In the example of Fig. 7, the next batch processing is performed two days later based on the minimum value of the pace of reservations, "1.66". In this manner, by performing the processing of updating the allocated number that begins with the calculation of the pace of reservations at the timing corresponding to the time when the next reservation is predicted to be made, it is possible to more finely adjust the allocated number as well as reducing the number of times of update processing.

Although the allocation update unit 42 determines the allocated number for each plan after calculating the pace of reservations and the expected allocated number for all plans in the above-described embodiment, the order of processing by the allocation update unit 42 is not limited thereto. Specifically, the allocation update unit 42 may perform the calculation of the pace of reservations and the expected allocated number and the determination of the allocated number for a plan with the n-th priority of sales and then perform the calculation of the pace of reservations and the expected allocated number and the determination of the allocated number for a plan with the (n+1)th priority of sales. In this case, when the unallocated number of vacancies becomes 0 halfway, the allocation update unit 42 may perform processing to set the allocated number to be the same as the number of reservations made without calculating the pace of reservations and the expected allocated number for the subsequent plans to be processed. Thus, there can be a case where the calculation of the pace of reservations and the expected allocated number is performed only for the first priority plan.

Although rooms of accommodation facilities are described as public facilities and accommodation plans are described as plans in the above-described embodiment, the present invention can be applied to an arbitrary reservation system other than accommodation reservations. For example, the present invention may be applied to reservations for golf courses (golf competition plans).

Although the unit price is used as a measure of the priority of sales in the above-described embodiment, a reference to set the priority of sales of each plan is not particularly limited. For example, the priority of sales of each plan may be set based on the profit rate.

### Reference Signs List

1...accommodation reservation system, 10...user terminal, 20...offerer terminal, 30...databases, 31...plan database, 32...vacancy database, 33...reservation record database, 40...reservation management device, 41...reservation receiving unit, 42 ... allocation update unit, 42a... calculation unit, 42b... estimation unit, 42c... determination unit, 42d... update unit, P1...reservation management program, P10...main module, P11...reservation receiving module, P12...allocation update module, P12a...calculation module, P12b...estimation module, P12c...determination module, P12d...update module

## Claims

1. A reservation management device capable of accessing an allocation storage unit that stores an allocated number of facilities for each of a plurality of plans set for one facility on one date of use and a reservation storage unit that stores a date of reservation for each plan, the device comprising:
a calculation unit that calculates a pace of reservations for at least a first priority plan with a highest priority of sales among the plurality of plans with different priorities of sales by referring to the reservation storage unit;
an estimation unit that estimates an expected number of reservations for at least the first priority plan based on the pace of reservations and a remaining number of days until the date of use;
a determination unit that determines the allocated number for each plan in descending order of the priority of sales based on the number of vacancies in the facilities, the expected number of reservations, and the priority of sales for each plan; and
an update unit that updates the allocated number for each plan stored in the allocation storage unit to the allocated number for each plan determined by the determination unit.

2. The reservation management device according to Claim 1, wherein
the determination unit sets the allocated number for the first priority plan in such a way that all vacancies in the facilities can be allocated to the first priority plan and sets the allocated number for a plan to be processed other than the first priority plan based on the expected number of reservations for the plan to be processed and the expected number of reservations and the number of reservations made for a plan with a higher priority of sales than the plan to be processed.

3. The reservation management device according to Claim 1 or 2, wherein
the calculation unit calculates the pace of reservations for each plan by dividing a reservation period of the plan by the number of reservations made for the plan.

4. The reservation management device according to any one of Claims 1 to 3, wherein
the calculation unit calculates the pace of reservations each time a reservation for a plan is made.

5. The reservation management device according to any one of Claims 1 to 3, wherein
the calculation unit calculates the pace of reservations again after a time corresponding to the minimum value of the calculated pace of reservations has elapsed.

6. A reservation management method executed by a reservation management device capable of accessing an allocation storage unit that stores an allocated number of facilities for each of a plurality of plans set for one facility on one date of use and a reservation storage unit that stores a date of reservation for each plan, the method comprising:
a calculation step of calculating a pace of reservations for at least a first priority plan with a highest priority of sales among the plurality of plans with different priorities of sales by referring to the reservation storage unit;
an estimation step of estimating an expected number of reservations for at least the first priority plan based on the pace of reservations and a remaining number of days until the date of use;
a determination step of determining the allocated number for each plan in descending order of the priority of sales based on the number of vacancies in the facilities, the expected number of reservations, and the priority of sales for each plan; and
an update step of updating the allocated number for each plan stored in the allocation storage unit to the allocated number for each plan determined in the determination step.

7. A reservation management program causing a computer to function as a reservation management device capable of accessing an allocation storage unit that stores an allocated number of facilities for each of a plurality of plans set for one facility on one date of use and a reservation storage unit that stores a date of reservation for each plan, the program causing the computer to implement:
a calculation unit that calculates a pace of reservations for at least a first priority plan with a highest priority of sales among the plurality of plans with different priorities of sales by referring to the reservation storage unit;
an estimation unit that estimates an expected number of reservations for at least the first priority plan based on the pace of reservations and a remaining number of days until the date of use;
a determination unit that determines the allocated number for each plan in descending order of the priority of sales based on the number of vacancies in the facilities, the expected number of reservations, and the priority of sales for each plan; and
an update unit that updates the allocated number for each plan stored in the allocation storage unit to the allocated number for each plan determined by the determination unit.

8. A computer-readable recording medium storing a reservation management program causing a computer to function as a reservation management device capable of accessing an allocation storage unit that stores an allocated number of facilities for each of a plurality of plans set for one facility on one date of use and a reservation storage unit that stores a date of reservation for each plan, the reservation management program causing the computer to implement:
a calculation unit that calculates a pace of reservations for at least a first priority plan with a highest priority of sales among the plurality of plans with different priorities of sales by referring to the reservation storage unit;
an estimation unit that estimates an expected number of reservations for at least the first priority plan based on the pace of reservations and a remaining number of days until the date of use;
a determination unit that determines the allocated number for each plan in descending order of the priority of sales based on the number of vacancies in the facilities, the expected number of reservations, and the priority of sales for each plan; and
an update unit that updates the allocated number for each plan stored in the allocation storage unit to the allocated number for each plan determined by the determination unit.
